# EUROPEAN PATENT APPLICATION

(11) **EP 3 496 410 A1**
(43) Date of publication of application: **12.06.2019**
(21) Application number: 16911521.9
(22) Date of filing: 27.12.2016
(51) Int. Cl.: H04N 21/472, H04N 21/436, H04N 21/441

(54) **INTERACTION METHOD AND SYSTEM FOR TELEVISION AND MOBILE TERMINAL**

(30) Priority: 03.08.2016 CN 201610629943
(71) Applicant: Shenzhen TCL New Technology Co., LTD, Shenzhen, Guangdong 518052 (CN)
(72) Inventor: BAO, Jian, Shenzhen Guangdong 518052 (CN)
(74) Representative: Kuhnen & Wacker Patent- und Rechtsanwaltsbüro PartG mbB
(86) International application number: PCT/CN2016/112311
(87) International publication number: WO 2018/023926

(57) **Abstract**

The present disclosure discloses a method of interaction between a television and a mobile terminal, including: the server acquiring a current program image and a positioning mark of a smart television; the server identifying the current program image to determine program information, the program being currently played by the smart television; the server sending the program information to a mobile terminal whose positioning mark matches the positioning mark of the smart television; the mobile terminal acquiring live broadcast or live broadcast comment related to the program currently played by the smart television from a mobile live broadcast platform based on the received program information. The present disclosure also provides a system of interaction between a television and a mobile terminal. The present disclosure solves the technical problem that the way to acquire television program comment information is poor in real-time, which disallows users to conveniently and quickly acquire the comment information of television programs, and thereby affects viewing experience of users.

## Description

### FIELD

The present disclosure relates to the field of smart television technology, and in particular, relates to a method and a system of interaction between a television and a mobile terminal.

### BACKGROUND

In the field of live television broadcasting, users watch television programs in a one-way communication mode for a long time, that is, one playback and another one watch. This one-way content broadcast mode allows users to discuss programs only in a limited range. Most of the time, family members like different programs, so more often than not, individuals enjoy program content alone.

With the development of Internet technology, some technologies for users to discuss in real time when watching television programs have emerged, such as installing social software on television, and communicating with other viewers through the social software on the television during watching television program. However, inputting text on television for communicating with other viewers in this way is a poor experience, which disallows users to send comment information in time or get comments from other viewers quickly, and makes it necessary to open the social software on television for communicating while watching programs, affecting viewing of television programs. Or, after watching some television programs, users may post relevant comments on some film and television review websites. However, to comment in this way is poor in real-time, and users may not pause to make comment during watching programs.

In a word, the way to acquire television program comment in prior art is poor in real-time, which disallows users to conveniently and quickly acquire comment information of television programs, and thereby affects viewing experience of users.

### SUMMARY

The present disclosure provides a method and a system of interaction between a television and a mobile terminal, which mainly aims to solve the technical problem that the way to acquire television program comment in prior art is poor in real-time, which disallows users to conveniently and quickly acquire the comment information of television programs, and thereby affects viewing experience of users.

In order to achieve the above object, the present disclosure provides a method of interaction between a television and a mobile terminal, including:
a server acquiring a current program image and a positioning mark of a smart television;
the server identifying the current program image to determine program information, the program being currently played by the smart television;
the server sending the program information to a mobile terminal whose positioning mark matches the positioning mark of the smart television;
the mobile terminal acquiring live broadcast or live broadcast comment related to the program currently played by the smart television from a mobile live broadcast platform according to the received program information;
when the positioning mark is an IP address, before the operation of the server sending the program information to a mobile terminal whose positioning mark matches the positioning mark of the smart television, the method of interaction between a television and a mobile terminal further includes:
   the server acquiring the IP address of the mobile terminal;
   the server judging whether the IP address of the mobile terminal is the same as the IP address of the smart television;
   if the IP address of the mobile terminal is the same as the IP address of the smart television, determining that the IP addresses of the mobile terminal and the smart television match;
   if the IP address of the mobile terminal is different from the IP address of the smart television, the method of interaction between a television and a mobile terminal further including:
      the server respectively acquiring position information of the mobile terminal and of the smart television;
      the server judging whether the mobile terminal and the smart television are in a same position range according to the position information;
      if the mobile terminal and the smart television are in the same position range, determining that the IP address of the mobile terminal matches with the IP address of the smart television;
      the program information including a program name, a channel name, and a channel mark of the television program.

In order to achieve the above object, the present disclosure provides a method of interaction between a television and a mobile terminal, including:
a server acquiring a current program image and a positioning mark of a smart television;
the server identifying the current program image to determine program information, the program being currently played by the smart television;
the server sending the program information to a mobile terminal whose positioning mark matches the positioning mark of the smart television;
the mobile terminal acquiring live broadcast or live broadcast comment related to the program currently played by the smart television from a mobile live broadcast platform based on the received program information.

Optionally, when the positioning mark is an IP address, before the operation of the server sending the program information to a mobile terminal whose positioning mark matches the positioning mark of the smart television, the method of interaction between a television and a mobile terminal further includes:
the server acquiring the IP address of the mobile terminal;
the server judging whether the IP address of the mobile terminal is the same as the IP address of the smart television;
if the IP address of the mobile terminal is the same as the IP address of the smart television, determining that the IP addresses of the mobile terminal and the smart television match.

Optionally, when the IP address of the mobile terminal is different from the IP address of the smart television, the method of interaction between a TV and a mobile terminal further includes:
the server respectively acquiring position information of the mobile terminal and of the smart television;
the server judging whether the mobile terminal and the smart television are in a same position range according to the position information;
if the mobile terminal and the smart television are in the same position range, determining that the IP address of the mobile terminal matches with the IP address of the smart television.

Optionally, the program information includes a program name, a channel name, and a channel mark of the television program.

Optionally, the method of interaction between a smart television and a mobile terminal further includes:
the server detecting whether the program currently played by the smart television changes according to the current program image;
when the program currently played by the smart television changes, the server sending program information of the changed television program to the mobile terminal.

In addition, to achieve the above object, the present disclosure also provides a system of interaction between a television and a mobile terminal, including a server, a mobile terminal, and a smart television, and the server includes:
an information acquiring module, configured to acquire a current program image and a positioning mark of a smart television;
a program identifying module, configured to identify the current program image to determine program information, the program being currently played by the smart television;
an information sending module, configured to send the program information to a mobile terminal whose positioning mark matches the positioning mark of the smart television;
the mobile terminal being configured to acquire live broadcast or live broadcast comment related to the program currently played by the smart television from a mobile live broadcast platform based on the received program information.

Optionally, the information acquiring module is further configured to acquire the IP address of the mobile terminal;
the system of interaction between a smart television and a mobile terminal further includes:
an information judging module, configured to judge whether the IP address of the mobile terminal is the same as the IP address of the smart television,
and if the IP address of the mobile terminal is the same as the IP address of the smart television, to determine that the IP addresses of the mobile terminal and the smart television match.

Optionally, the information acquiring module is further configured to respectively acquire position information of the mobile terminal and of the smart television;
the information judging module 40 is further configured to judge whether the mobile terminal and the smart television are in a same position range according to the position information,
and if the mobile terminal and the smart television are in the same position range, to determine that the IP address of the mobile terminal matches with the IP address of the smart television.

Optionally, the program information includes a program name, a channel name, and airtime of the television program.

Optionally, the program identifying module is further configured to detect whether the program currently played by the smart television changes according to the current program image;
the information sending module is further configured to send program information of the changed television program to the mobile terminal, when the program currently played by the smart television changes.

According to the method and the system of interaction between a television and a mobile terminal of the present disclosure, the server acquires a current program image and a positioning mark of a smart television, identifies the image information to determine program information currently played by the smart television, sends the program information to a mobile terminal whose positioning mark matches the positioning mark of the smart television to allow the mobile terminal to acquire live broadcast or live broadcast comment relevant to the television program currently played by the smart television from a mobile broadcast platform. That is, when are watching television program on the smart television, to make the mobile terminal and the television connected in one local area network to equal their positioning mark. Thus, the server may send the program information played by the smart television to user's mobile terminal according to the same positioning mark, thereby users may acquire live broadcast or live broadcast comment that matches the television program from a mobile live broadcast platform based on the received program information, which greatly improves the real-time performance of television program comment acquisition, and allows users to acquire live broadcast or live broadcast comment via mobile terminal without affecting the play of the television program on the smart television.

### BRIEF DESCRIPTION OF THE DRAWINGS

FIG. 1 is a flowchart of the method of interaction between a television and a mobile terminal in the first embodiment according to the present disclosure;
FIG. 2 is a flowchart of the method of interaction between a television and a mobile terminal in the second embodiment according to the present disclosure;
FIG. 3 is a schematic diagram of functional modules of the server in the system of interaction between a television and a mobile terminal in the first embodiment according to the present disclosure;
FIG. 4 is a schematic diagram of some embodiments of functional modules of the server in the system of interaction between a television and a mobile terminal in the first embodiment according to the present disclosure.

The implementation, functional features and advantages of the present disclosure will be further described with reference to the drawings in combination with the embodiments.

### DETAILED DESCRIPTION OF THE EMBODIMENTS

It should be understood that the specific embodiments described herein are only for the purpose of explaining the present disclosure and are not intended to limit the present disclosure.

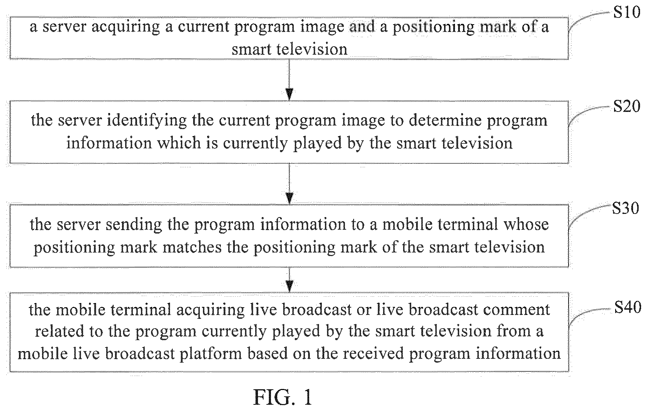

The present disclosure provides a method of interaction between a television and a mobile terminal. Referring to FIG. 1, FIG. 1 is a flowchart of the method of interaction between a television and a mobile terminal in the first embodiment according to the present disclosure.

In this embodiment, the method of interaction between the television and the mobile terminal includes:
operation S10, the server acquiring a current program image and a positioning mark of a smart television;
operation S20, the server identifying the current program image to determine program information, the program being currently played by the smart television;
operation S30, the server sending the program information to a mobile terminal whose positioning mark matches the positioning mark of the smart television;
operation S40, the mobile terminal acquiring live broadcast or live broadcast comment related to the program currently played by the smart television from a mobile live broadcast platform based on the received program information.

It may be appreciated that in this embodiment, the television program may be a live program or a television program playback. The mobile terminal may be a mobile phone, a tablet computer, etc. The following description will take a mobile phone as example, but the method of this embodiment is not limited to this. A server is provided. Smart television and mobile phone respectively establish communication with the server through a gateway. For example, Smart television and mobile phone are in the same local area network, and are connected with the server through the gateway of the local area network.

The smart television and the mobile phone respectively provide one application. Users may enable the application when watching television programs provided by the smart television, and enable the application on the mobile phone when acquiring the program information of television programs played by the smart television through the mobile phone.

When a user use a smart television and a mobile phone, it is common to connect the mobile phone and the smart television to the same wireless router at home, while the IP address of the same wireless router is the same, or when the mobile phone and smart television are connected to the same wireless router, their geographical locations are very close, that is, the mobile phone and smart television have the same or similar positioning marks, such as IP address or location information. In some embodiments, IP address is optionally used as the positioning mark, and when both the mobile phone and the smart television run the above applications, the network IP address used is the same. When enabling the above application on the mobile phone, send the IP address of the home LAN currently used by the mobile phone to the server.

During playing television programs, the smart television may capture currently played television picture according to a preset frequency to acquire image information, or upload the current frame picture as image information, as well as the IP address of the smart television at the same time, to the server. When the server receives the image information and IP address, it identifies the image information to acquire the program information of the television program currently played by the smart television. When the acquired IP address of the smart television is the same as the IP address of the mobile phone, the program information may be sent to the mobile phone corresponding to the IP address. In addition, after acquiring program information, the mobile phone may initiate a live broadcast of the television program or make comment on the related live broadcast to the mobile live broadcast platform based on the received program information.

Optionally, in some embodiments, the method of interaction between a television and a mobile terminal further includes:
the server acquiring the IP address of the mobile terminal;
the server judging whether the IP address of the mobile terminal is the same as the IP address of the smart television;
if the IP address of the mobile terminal is the same as the IP address of the smart television, determining that the IP addresses of the mobile terminal and the smart television match.

The server acquires the IP address of the smart television, associates the program information with the IP address, and stores the program information and the IP address. In the method proposed in this embodiment, the server may actively send the program information to the mobile phone or send the program information to the mobile phone when the mobile phone initiates a program inquiry request. For example, when a user wants to acquire a live broadcast of a certain television program through a mobile phone, a program inquiry request is initiated based on the mobile phone, the mobile phone loads the IP address of the home LAN used by the current mobile phone in the program inquiry request, the server extracts the IP address of the mobile phone when receiving the program inquiry request, and searches the stored program information of the television program currently played by the smart television corresponding to the IP address when extracting the IP address, and send the program information to the mobile phone, after the mobile phone acquires the program information, it may acquire the live broadcast or live comment of the corresponding television program from the mobile live broadcast platform based on the received program information.

The user sends a live broadcast acquisition request to the mobile live broadcast platform through the mobile phone to watch live broadcast or live broadcast comments made by other viewers interested in their own television programs on the mobile phone. When the mobile live broadcast platform receives the live broadcast acquisition request sent by the mobile phone, it acquires program information from the request, and then sends live broadcast or live broadcast comments related to the program information to the mobile phone. It may be understood that in the method proposed by the present disclosure, users' live broadcast may be viewed by other viewers when the user is watching live broadcast program, and other viewers' live broadcast may also be viewed and commented by users when viewers are watching or replaying the television program.

And, in some embodiments, when the IP address of the mobile terminal is different from the IP address of the smart television, the method of interaction between a television and a mobile terminal further including:
the server respectively acquiring position information of the mobile terminal and of the smart television;
the server judging whether the mobile terminal and the smart television are in a same position range according to the position information;
if the mobile terminal and the smart television are in the same position range, determining that the IP address of the mobile terminal matches with the IP address of the smart television.

It is understood that when users use mobile phones, they may use cellular networks. In this case, the IP address of the mobile phone and the IP address of the smart television are no longer the same. The mobile phone may acquire the program information of the television program currently being played by the smart television in this condition that the geographical location of the mobile phone is very close to the smart television. While uploading image information and IP address, the smart television uploads current location information, for example, setting a positioning module in the smart television to acquire current location information. Similarly, when the mobile phone sends a program query request to the server, the current location information is carried in the program query request. When the server receives the location information and IP address of the smart television, whether the mobile phone and the smart television are within the same location range may be judged according to the current location information of the mobile phone and the smart television. If the mobile phone and the smart television are within the same location range, it may be judged that the IP address of the mobile phone matches the IP address of the smart television. Otherwise, it is judged that their IP addresses are match. It may be understood that a certain error range is allowed when the mobile phone is positioned to acquire the position information, so when the position information of the smart television and the mobile phone is within the error range, it is judged that the smart television and the mobile phone are within a same position range. And, the program information in this embodiment includes, but is not limited to, program name, channel name, and airtime of the television program.

According to the method of interaction between a television and a mobile terminal in this embodiment, acquire a current program image and a IP address of the smart television, identify the image information to determine program information currently displayed by the smart television, and send the program information to a mobile terminal whose IP address matches the IP address of the smart television to allow the mobile terminal to acquire live broadcast or live broadcast comment relevant to the television program currently displayed by the smart television from a mobile broadcast platform. That is, when users are watching television program on the smart television, to make the mobile terminal and the television connected in one local area network to equal their IP address. Thus, the server may send the program information displayed by the smart television to user's mobile terminal according to the same IP address, thereby users may acquire live broadcast or live broadcast comment that matches the television program from a mobile live broadcast platform based on the received program information, which greatly improves the real-time performance of television program comment acquisition, and allows users to acquire live broadcast or live broadcast comment via mobile terminal without affecting the play of the television program on the smart television."

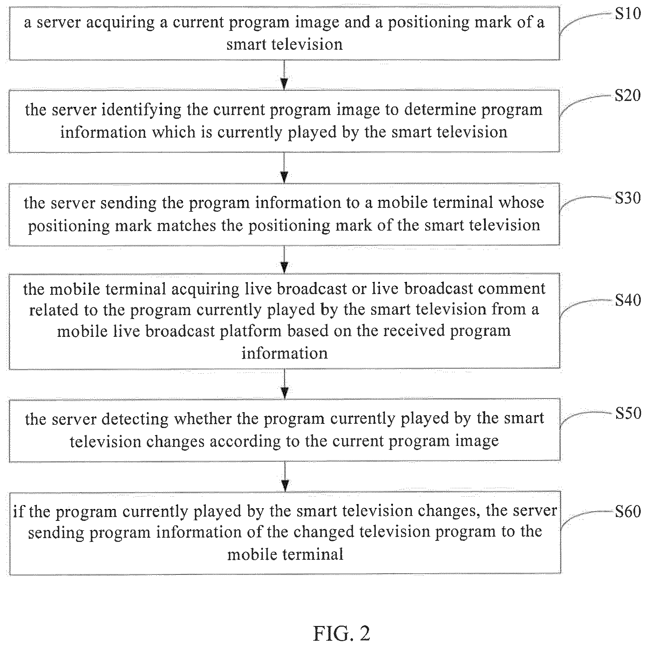

Based on the first embodiment, the second embodiment of the television program-based mobile live broadcast method of the present disclosure is proposed. Referring to FIG. 2, in this embodiment, the television program-based mobile live broadcast method further includes:
operation S50, the server detects whether the program currently played by the smart television changes according to the current program image;
operation S60, when the program currently played by the smart television changes, the server sends program information of the changed television program to the mobile terminal.

Since the television program played by the smart television may change, detect whether the television program currently played by the smart television changes according to the current program image. In order to allow users to acquire the changed program information in time via mobile phone, such as the television program changes, send the program information of the changed television program to the mobile phone with the same IP address or location information as the smart television.

Optionally, the server initiates a program subscription request to the server through an application on the mobile phone, and after receiving the program subscription request sent by the mobile phone, the server acquires the IP address of the mobile phone from the program subscription request and determines whether the program information matching the IP address has changed, and if so, pushes the changed program information of the television program to the mobile phone. Similarly, if the mobile phone uses a cellular network, search the matching program information according to the location information after receiving the program subscription request and return it to the mobile phone.

The present disclosure also provides a system of interaction between a television and a mobile terminal.

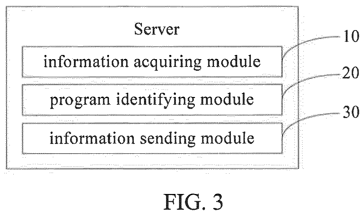

Referring to FIG. 3, FIG. 3 is a schematic diagram of functional modules of the server in the system of interaction between a television and a mobile terminal in the first embodiment according to the present disclosure;
In this embodiment, the system of interaction between a television and a mobile terminal includes a server, a mobile terminal, and an smart television, the server includes the following modules:
an information acquiring module 10, configured to acquire a current program image and a positioning mark of a smart television;
a program identifying module 20, configured to identify the current program image to determine program information, the program being currently played by the smart television;
an information sending module 30, configured to send the program information to a mobile terminal whose positioning mark matches the positioning mark of the smart television;
the mobile terminal is configured to acquire live broadcast or live broadcast comment related to the program currently played by the smart television from a mobile live broadcast platform based on the received program information.

It may be appreciated that in this embodiment, the television program may be a live program or a back-to-back television program. Smart television and mobile phone respectively establish communication with the server through a gateway. For example, Smart television and mobile phone are in the same local area network, and are connected with the server through the gateway of the local area network.

The smart television and the mobile phone respectively provide one application. Users may enable the application when watching television programs provided by the smart television, and enable the application on the mobile phone when acquiring the program information of television programs played by the smart television through the mobile phone.

When a user use a smart television and a mobile phone, it is common to connect the mobile phone and the smart television to the same wireless router at home, while the IP address of the same wireless router is the same, or when the mobile phone and smart television are connected to the same wireless router, their geographical locations are very close, that is, the mobile phone and smart television have the same or similar positioning marks, such as IP address or location information. In some embodiments, IP address is optionally used as the positioning mark, and when both the mobile phone and the smart television run the above applications, the network IP address used is the same. When enabling the above application on the mobile phone, send the IP address of the home LAN currently used by the mobile phone to the server.

During playing television programs, the smart television may capture currently played television picture according to a preset frequency to acquire image information, or upload the current frame picture as image information, as well as the IP address of the smart television at the same time, to the server. When the server receives the image information and IP address, the program identifying module 20 identifies the image information to acquire the program information of the television program currently played by the smart television. When the IP address of the smart television acquired by the information acquiring module 10 is the same as the IP address of the mobile phone, the information sending module 30 sends the program information to the mobile phone corresponding to the IP address.

In addition, after acquiring program information, the mobile phone may initiate a live broadcast of the television program or make comment on the related live broadcast to the mobile live broadcast platform based on the received program information.

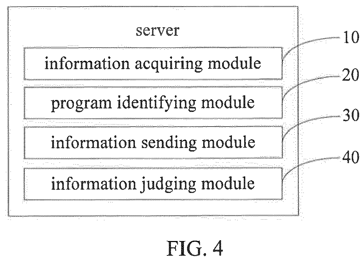

Optionally, referring to FIG. 4, in some embodiments, the information acquiring module 10 is further configured to acquire the IP address of the mobile terminal;
the system of interaction between a smart television and a mobile terminal further includes:
an information judging module 40, configured to judge whether the IP address of the mobile terminal is the same as the IP address of the smart television, and if the IP address of the mobile terminal is the same as the IP address of the smart television, to determine that the IP addresses of the mobile terminal and the smart television match.

The information acquiring module 10 acquires the IP address of the smart television, associates the program information with the IP address, and stores the program information and the IP address. In the system proposed in this embodiment, the server may actively send the program information to the mobile phone or send the program information to the mobile phone when the mobile phone initiates a program inquiry request. For example, when a user wants to acquire a live broadcast of a certain television program through a mobile phone, a program inquiry request is initiated based on the mobile phone, the mobile phone loads the IP address of the home LAN used by the current mobile phone in the program inquiry request, the information acquiring module 10 extracts the IP address of the mobile phone when the server has received the program inquiry request, and searches the stored program information of the television program currently played by the smart television corresponding to the IP address when extracting the IP address, and send the program information to the mobile phone, after the mobile phone acquires the program information, it may acquire the live broadcast or live comment of the corresponding television program from the mobile live broadcast platform based on the received program information.

The user sends a live broadcast acquisition request to the mobile live broadcast platform through the mobile phone to watch live broadcast or live broadcast comments made by other viewers interested in their own television programs on the mobile phone. When the mobile live broadcast platform receives the live broadcast acquisition request sent by the mobile phone, it acquires program information from the request, and then sends live broadcast or live broadcast comments related to the program information to the mobile phone. It may be understood that in the method proposed by the present disclosure, users' live broadcast may be viewed by other viewers when the user is watching live broadcast program, and other viewers' live broadcast may also be viewed and commented by users when viewers are watching or replaying the television program.

Further, in some embodiments, the information acquiring module 10 is further configured to respectively acquire the location information of the mobile terminal and the smart television;
the information judging module 40 is further configured to judge whether the mobile terminal and the smart television are in a same position range according to the position information,
and if the mobile terminal and the smart television are in the same position range, to determine that the IP address of the mobile terminal matches with the IP address of the smart television.

It is understood that when users use mobile phones, they may use cellular networks. In this case, the IP address of the mobile phone and the IP address of the smart television are no longer the same. The mobile phone may acquire the program information of the television program currently being played by the smart television in this condition that the geographical location of the mobile phone is very close to the smart television. While uploading image information and IP address, the smart television uploads current location information, for example, setting a positioning module in the smart television to acquire current location information. Similarly, when the mobile phone sends a program query request to the server, the current location information is carried in the program query request. When the server receives the location information and IP address of the smart television, the information judging module 40 may judge whether the mobile phone and the smart television are within the same location range according to the current location information of the mobile phone and the smart television. If the mobile phone and the smart television are within the same location range, it may be judged that the IP address of the mobile phone matches the IP address of the smart television. Otherwise, it is judged that their IP addresses are match.

It may be understood that a certain error range is allowed when the mobile phone is positioned to acquire the position information, so when the position information of the smart television and the mobile phone is within the error range, the information judgment module 40 judges the smart television and the mobile phone to be within a same position range. And, the program information in this embodiment includes, but is not limited to, program name, channel name, and airtime of the television program.

According to the system of interaction between a television and a mobile terminal proposed in the present embodiment, acquire a current program image and a IP address of the smart television, identify the image information to determine program information currently played by the smart television, and send the program information to a mobile terminal whose IP address matches the IP address of the smart television to allow the mobile terminal to acquire live broadcast or live broadcast comment relevant to the television program currently displayed by the smart television from a mobile broadcast platform. That is, when users are watching television program on the smart television, to make the mobile terminal and the television connected in one local area network to equal their IP address, thereby the server may send the program information played by the smart television to user' mobile terminal according to the same IP address. thereby users may acquire live broadcast or live broadcast comment that matches the television program from a mobile live broadcast platform based on the received program information, which greatly improves the real-time performance of television program comment acquisition, and allows users to acquire live broadcast or live broadcast comment via mobile terminal without affecting the play of the television program on the smart television.

Based on the first embodiment, the second embodiment of the television program-based mobile live broadcast system of the present disclosure is proposed. In this embodiment, a program identifying module 20 is further configured to detect whether the program currently played by the smart television changes according to the current program image; an information sending module 30 is further configured to send program information of the changed television program to the mobile terminal, when the program currently played by the smart television changes.

Since the television program played by the smart television may change, the program identifying module 20 detects whether the television program currently played by the smart television changes according to the current program image. In order to allow users to acquire the changed program information in time via mobile phone, such as the television program changes, the information sending module 30 sends the program information of the changed television program to the mobile phone with the same IP address or location information as the smart television.

Or, the user initiates a program subscription request to the server through an application on the mobile phone, the server acquires the IP address of the mobile phone from the program subscription request after receiving the program subscription request sent by the mobile phone. The program identifying module 20 determines whether the program information matching the IP address has changes, and if the program information has changed, the information sending module 30 sends the program information of the changed television program to the mobile phone. Similarly, if the mobile phone uses a cellular network, the server may search the matching program information according to the location information after receiving the program subscription request and return it to the mobile phone.

The above is only the preferred embodiment of the present disclosure and is not therefore limiting the scope of the patent of the present disclosure. Any equivalent structure or equivalent process change made by using the contents of the present specification and drawings, or directly or indirectly applied in other related technical fields, is similarly included in the scope of the patent protection of the present disclosure.

## Claims

1. A method of interaction between a television and a mobile terminal, **characterized in that**, the method comprises:
a server acquiring a current program image and a positioning mark of a smart television;
the server identifying the current program image to determine program information which is currently played by the smart television;
the server sending the program information to a mobile terminal whose positioning mark matches the positioning mark of the smart television;
the mobile terminal acquiring live broadcast or live broadcast comment related to the program currently played by the smart television from a mobile live broadcast platform based on the received program information;
when the positioning mark is an IP address, before the operation of the server sending the program information to a mobile terminal whose positioning mark matches the positioning mark of the smart television, the method of interaction between a television and a mobile terminal further comprising:
the server acquiring the IP address of the mobile terminal;
the server judging whether the IP address of the mobile terminal is the same as the IP address of the smart television;
if the IP address of the mobile terminal is the same as the IP address of the smart television, determining that the IP addresses of the mobile terminal and the smart television match;
if the IP address of the mobile terminal is different from the IP address of the smart television, the method of interaction between a television and a mobile terminal further comprising:
the server respectively acquiring position information of the mobile terminal and of the smart television;
the server judging whether the mobile terminal and the smart television are in a same position range according to the position information;
if the mobile terminal and the smart television are in the same position range, determining that the IP address of the mobile terminal matches with the IP address of the smart television;
the program information comprising a program name, a channel name, and a channel mark of the television program.

2. A method of interaction between a television and a mobile terminal, **characterized in that**, the method comprises:
a server acquiring a current program image and a positioning mark of a smart television;
the server identifying the current program image to determine program information, which is currently played by the smart television;
the server sending the program information to a mobile terminal whose positioning mark matches the positioning mark of the smart television;
the mobile terminal acquiring live broadcast or live broadcast comment related to the program currently played by the smart television from a mobile live broadcast platform based on the received program information.

3. The method according to claim 2, **characterized in that**, when the positioning mark is an IP address, before the operation of the server sending the program information to a mobile terminal whose positioning mark matches the positioning mark of the smart television, the method further comprises:
the server acquiring the IP address of the mobile terminal;
the server judging whether the IP address of the mobile terminal is the same as the IP address of the smart television;
if the IP address of the mobile terminal is the same as the IP address of the smart television, determining that the IP addresses of the mobile terminal and the smart television match.

4. The method according to claim 3, **characterized in that**, when the IP address of the mobile terminal is different from the IP address of the smart television, the method further comprising:
the server respectively acquiring position information of the mobile terminal and of the smart television;
the server judging whether the mobile terminal and the smart television are in a same position range according to the position information;
if the mobile terminal and the smart television are in the same position range, determining that the IP address of the mobile terminal matches with the IP address of the smart television.

5. The method according to claim 2, **characterized in that**, the program information comprises a program name, a channel name, and a channel mark of the television program.

6. The method according to claim 2, **characterized in that**, the method further comprises:
the server detecting whether the program currently played by the smart television changes according to the current program image;
if the program currently played by the smart television changes, the server sending program information of the changed television program to the mobile terminal.

7. The method according to claim 3, **characterized in that**, the method further comprises:
the server detecting whether the program currently played by the smart television changes according to the current program image;
if the program currently played by the smart television changes, the server sending program information of the changed television program to the mobile terminal.

8. The method according to claim 4, **characterized in that**, the method further comprises:
the server detecting whether the program currently played by the smart television changes according to the current program image;
if the program currently played by the smart television changes, the server sending program information of the changed television program to the mobile terminal.

9. The method according to claim 5, **characterized in that**, the method further comprises:
the server detecting whether the program currently played by the smart television changes according to the current program image;
if the program currently played by the smart television changes, the server sending program information of the changed television program to the mobile terminal.

10. A system of interaction between a television and a mobile terminal, comprising a server, a mobile terminal, and a smart television, **characterized in that**, the server comprises:
an information acquiring module, configured to acquire a current program image and a positioning mark of a smart television;
a program identifying module, configured to identify the current program image to determine program information which is currently played by the smart television;
an information sending module, configured to send the program information to a mobile terminal whose positioning mark matches the positioning mark of the smart television;
the mobile terminal being configured to acquire live broadcast or live broadcast comment related to the program currently played by the smart television from a mobile live broadcast platform based on the received program information.

11. The system according to claim 10, **characterized in that**, the information acquiring module is further configured to
acquire IP address of the mobile terminal;
the system further comprises:
an information judging module, configured to judge whether the IP address of the mobile terminal is the same as the IP address of the smart television,
and if the IP address of the mobile terminal is the same as the IP address of the smart television, determine that the IP addresses of the mobile terminal and the smart television match.

12. The system according to claim 11, wherein the information acquiring module is further configured to respectively acquire position information of the mobile terminal and of the smart television;
the information judging module is further configured to judge whether the mobile terminal and the smart television are in a same position range according to the position information,
and if the mobile terminal and the smart television are in the same position range, determine that the IP address of the mobile terminal matches with the IP address of the smart television.

13. The system according to claim 10, **characterized in that**, the program information comprises a program name, a channel name, and airtime of the television program.

14. The system according to claim 10, **characterized in that**, the program identifying module is further configured to detect whether the program currently played by the smart television changes according to the current program image;
the information sending module is further configured to send program information of the changed television program to the mobile terminal, if the program currently played by the smart television changes.

15. The system according to claim 11, **characterized in that**, the program identifying module is further configured to detect whether the program currently played by the smart television changes according to the current program image;
the information sending module is further configured to send program information of the changed television program to the mobile terminal, if the program currently played by the smart television changes.

16. The system according to claim 12, **characterized in that**, the program identifying module is further configured to detect whether the program currently played by the smart television changes according to the current program image;
the information sending module is further configured to send program information of the changed television program to the mobile terminal, when the program currently played by the smart television changes.

17. The system according to claim 13, **characterized in that**, the program identifying module is further configured to detect whether the program currently played by the smart television changes according to the current program image;
the information sending module is further configured to send program information of the changed television program to the mobile terminal, if the program currently played by the smart television changes.
